Europäisches Patentamt

**European Patent Office**

**Office européen des brevets**

(11) Publication number: **0 220 017**
A2

(12) **EUROPEAN PATENT APPLICATION**

(21) Application number: **86307741.8**

(22) Date of filing: **07.10.86**

(51) Int. Cl.⁴: **C 08 K 5/09**
C 08 L 23/02, C 08 L 25/04
C 08 L 67/02, C 08 L 77/00

(30) Priority: **14.10.85 GB 8525284**

(43) Date of publication of application:
**29.04.87 Bulletin 87/18**

(84) Designated Contracting States:
**BE DE FR GB IT NL SE**

(71) Applicant: **DU PONT CANADA INC.**
**Box 2200 Streetsville Postal Station**
**Mississauga Ontario L5M 2H3(CA)**

(72) Inventor: **White, George**
**10 Wagner Street**
**Glenburnie Ontario, K0H 1SO(CA)**

(74) Representative: **Ellis, John Clifford Holgate et al,**
**MEWBURN ELLIS & CO. 2/3 Cursitor Street**
**London EC4A 1BQ(GB)**

(54) Polymer compositions with improved flow characteristics.

(57) Polymer compositions of improved flow characteristics are disclosed. The compositions comprise an injection-mouldable polymer and 0.5 to 10% by weight of a sodium salt of at least one $C_6$-$C_{16}$ aliphatic monocarboxylic acid. In preferred embodiments, the acid is a $C_6$-$C_{10}$ acid. Examples of the polymers are polyolefins, polyamides, polyesters and polystyrene. In a preferred embodiment, the polymer is a homopolymer of ethylene or a copolymer of ethylene and at least one $C_4$-$C_{10}$ higher alpha-olefin. The compositions may be used, in particular, in injection moulding processes, e.g. in the manufacture of containers.

EP 0 220 017 A2

Croydon Printing Company Ltd.

POLYMER COMPOSITIONS

WITH IMPROVED FLOW CHARACTERISTICS

The present invention relates to polymer compositions having improved flow characteristics and particularly to compositions of thermoplastic polymers, especially polyethylene, and sodium salts of short chain mono-carboxylic acids.

Thermoplastic polymers e.g. homopolymers and copolymers of alpha-olefins having 2-10 carbon atoms, and especially homopolymers of ethylene or propylene and copolymers of ethylene and at least one $C_4$-$C_{10}$ alpha-olefin, may be used in a wide variety of end-uses. The end-uses for such polymers include in the form of film, fibres, moulded or thermoformed articles, pipe, coatings and the like.

One important end-use is in the fabrication of articles by moulding techniques, especially injection moulding techniques. Examples of articles that may be manufactured using injection moulding processes include containers, especially containers that are used for the packaging of ice cream, yogurt, margarine and the like, crates, tote boxes, tanks and barrels. The economics of the injection moulding of articles from polymers e.g. from polyethylene, depend in part on the thickness of the walls of the articles, especially the minimum thickness that is consistent with the manufacture of articles of acceptable appearance and physical properties, and the rate e.g. cycle time, at which such articles may be manufactured. The minimum cycle time may be related to the thickness of the article as it tends to be more difficult to fill a mould having a small cross-sectional area than it is to fill a mould of larger cross-sectional area.

Polyethylene having a broad range of melt indices may be used in injection moulding processes, melt index being measured by the procedure of ASTM D-1238 (condition E). Melt index is a measure of melt viscosity of a polymer, and is related to polymer molecular weight. Typically, the melt index of polyethylene used in injection moulding processes is in the range of about 0.03 to 120, especially 0.3 to 65, dg/min. While a reduction in melt viscosity is obtained by increasing the melt index of the polymer, and hence increasing the rate of flow of molten polymer into a mould, such an increase in melt index may result in unacceptable physical properties of the moulded article as a consequence of the decrease in molecular weight of the polymer. Thus the required physical properties of an article may be an important factor in determining the maximum rate at which commercially-acceptable articles may be moulded.

Salts of carboxylic acids have been incorporated into olefin polymers for a number of reasons. For instance, olefin polymers of improved gloss and decreased haze may be obtained by incorporating both metal salts of fatty acids and metal salts of carboxylic acids containing an aromatic group into polyolefins, as is disclosed in U.S. Patent 3 591 538 of V. J. Smith, which issued 1971 July 06. Compositions of polyolefins and metal salts of higher fatty acids e.g. lithium stearate, potassium palmitate, sodium stearate and lithium 12-hydroxystearate are disclosed in Japanese published application No. 58 136 639, published 1983 August 13, and/or No. 58 057 447, published 1983 April 05, both of Mitsui Petrochemical Industries Ltd.

Compositions of thermoplastic polymers, especially polyolefins, having improved flow characteristics have now been found.

Accordingly, the present invention provides a composition comprising:

(a) an injection-mouldable thermoplastic polymer, and

(b) 0.5 to 10%, by weight of polymer, of a sodium salt of at least one C6-C16 aliphatic saturated mono-carboxylic acid.

In a preferred embodiment of the compositions of the present invention, the polymer is a homopolymer or copolymer of alpha-olefins having 2-10 carbon atoms.

In a further embodiment, the polymer is a polyethylene selected from the group consisting of homopolymers of ethylene and copolymers of ethylene and at least one $C_4$-$C_{10}$ higher alpha-olefin, said polyethylene having a density of at least 0.900 $g/cm^3$ and a melt index in the range of 0.03 to 120 dg/min.

In another embodiment, the polymer is a homopolymer or copolymer of propylene.

In yet another embodiment, the composition contains 1.0 to 5% by weight of the sodium salt.

The present invention also provides in a process for the injection moulding of an article from a polymer composition, the improvement comprising feeding to injection moulding apparatus a composition comprising:

(a) an injection-mouldable thermoplastic polymer, and

(b) 0.5 to 10%, by weight of polymer, of a sodium salt of at least one $C_6$-$C_{16}$ aliphatic saturated mono-carboxylic acid.

In a preferred embodiment of the process of the present invention, the polymer is a homopolymer or copolymer of alpha-olefins having 2-10 carbon atoms, especially a polyethylene selected from the group consisting of homopolymers of ethylene and copolymers of ethylene and at least one $C_4$-$C_{10}$ higher alpha-olefin, such polyethylene having a density of at least 0.900 $g/cm^3$ and a melt index in the range of 0.03 to 120 dg/min.

The polymer of compositions of the present invention is a thermoplastic polymer that is capable of being used in an injection moulding process for the fabrication of articles. Such polymers include polyolefins, polyamides, polyesters and polystyrene. Examples of such polyamides include the polymers referred to as nylon 66, nylon 6, nylon 11, nylon 12 and nylon 6/10. Examples of polyesters include polyethylene terephthalate. In embodiments, the polymer is a homopolymer or copolymer of hydrocarbon alpha-olefins having 2-10 carbon atoms, including styrene. In particular, the polymer may be a polyethylene. Alternatively, the polymer may be a homopolymer of propylene or a copolymer of propylene with another of the alpha-olefins e.g. ethylene. In other embodiments, the polymer may be a homopolymer of a $C_4$-$C_{10}$ alpha-olefin or a copolymer thereof, including copolymers with ethylene or propylene.

In embodiments, the polymer is a polyethylene and may be a homopolymer of ethylene or a copolymer of ethylene with at least one $C_4$-$C_{10}$ higher alpha-olefin, especially copolymers of ethylene with butene-1, hexene-1 and/or octene-1. The density of the polyethylene is usually at least 0.900 g/cm$^3$ and especially 0.950 to 0.965 g/cm$^3$. The polymers may have a melt index in the range of about 0.03 to 120 dg/min, especially 0.3 to 65 dg/min. Such polymers are known, and in particular include polymers that are used in injection molding processes.

The present invention will generally be described hereinafter with reference to polyethylene as the polymer.

The salts that are added to polyethylene, to form the compositions of the present invention, are sodium salts. Sodium salts have been found to be more effective in improving polymer flow characteristics than potassium salts, as is illustrated hereinafter, and are preferable to magnesium, calcium and aluminum salts.

The sodium salts are salts of at least one of the $C_6$-$C_{16}$ aliphatic saturated monocarboxylic acids, especially the $C_6$-$C_{10}$ acids. Examples of such acids are hexanoic acid, octanoic acid and decanoic acid, which are also known as caproic acid, caprylic acid and capric acid, respectively. The acids may be mixed acids e.g. a mixture of C8 and C10 acids. In preferred embodiments of the present invention, the acid is C6 acid, C8 acid, C9 acid or mixed C8-C10 acids.

The compositions of the present invention contain 0.5 to 10%, by weight of the polyethylene, of the sodium salt. In preferred embodiments, the compositions contain 1.0 to 5% by weight of the sodium salts. However, under some circumstances, which are believed to relate to a combination of characteristics of the mould used in the injection moulding process, the process conditions and the polymer subjected to the process, it may be found that the higher concentrations of sodium salts lead to effects that may be undesirable e.g. delamination of layers of polymer from the moulded article may occur. In that event, a reduction in the amount of sodium salt will tend to reduce or eliminate such effects while still providing benefits of the present invention.

In alternative embodiments, the salt is an admixture of the salts defined hereinbefore with a salt of a fatty acid, especially stearic acid; as used herein fatty acids are defined as monocarboxylic aliphatic saturated or unsaturated acids. Sodium salts of the fatty acids should be used. Up to 70% of the sodium salts of the C6-C16 aliphatic saturated monocarboxylic acid may be replaced with the sodium salts of longer chain fatty acids.

The compositions of the present invention may also contain antioxidants and other stabilizers, pigments, nucleating agents and the like, as will be understood by those skilled in the art, although in some circumstances it may be preferable to limit or exclude the use of additives that are highly polar in nature as such additives might exhibit effects of interactions with the sodium salts.

The compositions may be prepared by blending the polymer and sodium salt, using for example a twin screw extruder or a high intensity mixing apparatus.
Alternatively, the compositions may be prepared in the form
of a concentrate e.g. using high intensity mixing
apparatus, and then blended with polymer to form
compositions with the intended amount of sodium salt. Such
concentrates may contain up to about 50% by weight of
sodium salt, especially 25-50% by weight. The polymer of
the concentrate should be the same as or of similar
properties to the polymer of the composition; other
polymers may be used to form the concentrate but the use of
such polymers may affect physical or other properties of
the resultant composition.

The compositions of the present invention are
capable of being fabricated into a variety of articles
using injection moulding processes; techniques for the
fabrication of articles from thermoplastic polymer
compositions are known to those skilled in the art. In
embodiments, the compositions may be fabricated into
containers, crates, pails and articles having relatively
thick sections. Examples of containers are those intended
for food end-uses, e.g. the so-called thin-wall containers
that have a wall thickness of less than 0.7 mm, especially
less than 0.5 mm. The latter containers are known in the
art, being described in Canadian Patent 1 117 699 of P.J.
Lovell and I.C.B. Saunders, which issued 1982 February 02.

The present invention is illustrated by the
following examples:

### Example I

SCLAIR® 2911 polyethylene, an ethylene homopolymer
having a density of 0.960 g/cm$^3$ and a melt index of 25
dg/min, was melt blended with metal salts of carboxylic
acids using a twin screw extruder. The pelletized blends
thus obtained were formed into one litre containers having
a wall thickness of 0.56 mm on a commercial-scale injection
moulding apparatus. As a comparison, two other polymers
having similar flow properties to the above blends were moulded into the containers.

Further details and the results obtained are given in Table I. The tests carried out were conducted as follows:

(i) Tensile yield was measured according to the procedure of ASTM D 638-84;

(ii) Elongation was measured according to the procedure of ASTM D 638-84;

(iii) Dart impact was measured according to the procedure of ASTM D-1709-75 using a dart having a weight of 912g and a diameter of 3.8 cm;

(iv) Graves tear yield was measured according to the procedure of ASTM D 1004-66;

(v) Graves tear elongation was measured according to the procedure of ASTM D-1004-66;

(vi) Snake flow was measured by injection moulding the blends at a melt temperature of 290°C and an injection pressure of 15 MPa using a mould having a thickness of 0.38 mm and an elongated snake-like configuration.

This example shows that the compositions of the present invention had melt flow characteristics, as measured by snake flow, that were similar to those of the higher melt index polymer SCLAIR 2915 polyethylene. However, the articles injection moulded from compositions of the invention exhibited superior properties, especially as measured by dart impact, Graves tear and Graves elongation tests. Both of the polymers used as comparisons are used commercially in the injection moulding of containers of the type described in this example.

Example II

SCLAIR 2911 polyethylene was melt blended with metal salts using the procedure of Example I. Samples of the compositions thus obtained were subjected to the snake flow test described in Example I.

The results obtained are given in Table II.

Only the sodium salt of the mixed monocarboxylic acids was effective as a flow improver. The related potassium and lithium salts were much less effective and sodium salts of the dibasic (dicarboxylic) acids, dimer and trimer acids were not effective at all.

### Example III

SCLAIR 2915 polyethylene powder was blended with a number of sodium salts using a Henschel* high intensity mixer. The resultant compositions were injection moulded using the snake flow mould.

The results obtained are given in Table III for a variety of salts at concentrations of 1% and 2% by weight of the polyethylene.

The results show that the sodium salts of all of the acids within the range C6-C16 were effective in improving the flow of the polyethylene, with the acids in the range C6-C10 being particularly effective.

### Example IV

The procedure of Example III was repeated using a variety of polyethylenes, with 2% by weight of sodium caproate being added to each of the polyethylenes. Snake flow of the resultant compositions and of the polyethylene without sodium caproate was measured.

The results obtained are given in Table IV. These results show that polyethylenes having wide range of melt index exhibit a significant improvement in flow properties as a result of the addition of sodium caproate.

### Example V

The procedure of Example III was repeated using a composition of SCLAIR 2915 polyethylene and a number of salts of carboxylic acids that had been prepared using a Henschel high intensity mixer.

The results obtained are given in Table V. These results show that the improvement in flow properties

*   denotes trade mark

appears to be proportional to the molal concentration of the sodium salt of the fatty acid that is added to the composition, and that the sodium salt may be a salt of a single acid or a mixture of acids.

## Example VI

A sample of ground (powdered) SCLAIR 2906 M6 polyethylene, an ethylene homopolymer having a density of 0.960 g/cm$^3$ and a melt index of 0.75 dg/min. was dry blended with 0.65% by weight of each of sodium caprylate and sodium stearate. The resultant admixture was moulded into test samples for the measurement of environmental stress crack resistance (ESCR, using procedure of ASTM D 1693-75) and notched Izod impact strength (using procedure of ASTM D 256-81). As a comparison, test samples were also prepared using SCLAIR 2909 polyethylene, an ethylene homopolymer having a density of 0.960 g/cm$^3$ and a melt index of 13.5 dg/min.

The results obtained were as follows:

| Run No. | 63 | 64 | 65 |
|---|---|---|---|
| Polyethylene (Type) | 2909 | 2906M6 | 2906M6 |
| Sodium Salts | No | No | Yes |
| Snake Flow (cm) | 48 | 20 | 52 |
| ESCR (hrs.) (100% IGEPAL*, 50°) | 0.85 | 21.0 | 16.0 |
| Notched Izod -40°C (Joules/cm) | 1.9 | 43 | 30 |

This example shows that the addition of the sodium salts increased the snake flow, a measure of the flow and hence injection moulding properties, of SCLAIR 2906M6 polyethylene so as to provide a composition with similar snake flow to SCLAIR 2909 polyethylene but with

* denotes trade mark

substantially superior environmental stress crack resistance and notched Izod impact strength.

## Example VII

Plaques measuring 12.7 cm x 15.2 cm x 2.5 cm were moulded from polypropylene using a commercial scale Engel* injection moulding machine. The polypropylene was Profax* 7523, a propylene homopolymer having a melt flow index (MFI) of 5 and obtained from Hercules Inc. In the moulding process, the melt temperature was 290°C, the mould temperature was 33°C and the injection pressure was 1.72 mPa. The so-called screw forward time, an important segment of the moulding cycle, was 5.7 seconds.

The above procedure was repeated using a composition of the polypropylene and 1.5% by weight of sodium caprylate; the sodium caprylate was added in the form of a concentrate of 25% by weight of sodium caprylate in an ethylene homopolymer having a density of 0.960 $g/cm^3$ and a melt index of 50 dg/min. The screw forward time was 2.1 seconds, indicating that the composition had significantly better flow characteristics than the polypropylene without sodium caprylate.

* denotes trade mark

0220017

## TABLE I

| Run No. | 1 | 2 | 3 | 4 |
|---|---|---|---|---|
| Polymer* | 2911 | 2911 | A | B |
| **Salt** | | | | |
| cation | Na | Na | - | - |
| acid | $C_2^8$ | $C_2^8/C_{10}$ | - | - |
| Amount (%) | | | - | - |
| **Tests** | | | | |
| Tensile yield (MPa) | | | | |
| MD | 21.6 | 21.5 | 21.0 | 19.1 |
| TD | 20.7 | 21.0 | 24.1 | 18.8 |
| Elongation (%) | | | | |
| MD | 810 | 790 | 780 | 770 |
| TD | 620 | 530 | 480 | 290 |
| Dart Impact ($F_{50}$, cm) | 51 | 43 | 25 | <13 |
| Graves tear yield (MPa) | | | | |
| MD | 15.8 | 16.5 | 14.2 | 11.1 |
| TD | 11.4 | 10.8 | 7.6 | 8.3 |
| Graves tear elongation | | | | |
| MD | 290 | 360 | 200 | 160 |
| TD | 95 | 50 | 10 | 20 |
| Snake flow (cm) | 12.4 | 13.0 | 12.7 | 14.5 |

\* A = SCLAIR 2915 polyethylene, an ethylene homopolymer having a density of 0.959 $g/cm^3$ and a melt index of 65 dg/min.

B = SCLAIR 2818 polyethylene, a copolymer of ethylene and butene-1 having a density of 0.955 $g/cm^3$ and a melt index of 120 dg/min.

- 12 -

## TABLE II

| Run No. | 5 | 6 | 7 | 8 | 9 |
|---|---|---|---|---|---|
| **Salt** | | | | | |
| cation | Na | K | Li | Na | Na |
| acid | $C_8/C_{10}$ | $C_8/C_{10}$ | $C_8/C_{10}$ | $C_9$ dibasic | $C_{10}$ dibasic |
| Amount (%) | 2.5 | 2.4 | 2.0 | 2.0 | 2.0 |
| Snake Flow (cm) | 16 | 10.2 | 9.4 | 9.4 | 9.1 |

## TABLE II (Continued)

| Run No.* | 10 | 11 | 12 | 13 |
|---|---|---|---|---|
| **Salt** | | | | |
| cation | Na | Na | – | – |
| acid | $C_{36}$ (dimer) | $C_{54}$ (trimer) | – | – |
| Amount (%) | 2.0 | 2.0 | – | – |
| Snake flow (cm) | 9.7 | 9.7 | 9.1 | 11.4 |

\* In Run 12, the polymer was SCLAIR 2911 polyethylene.
In Run 13, the polymer was SCLAIR 2915 polyethylene.
In Runs 8 to 11, the salts were, respectively, Emerox**
1100, Aldrich** D-100-9, Empol** 1010 and Empol 1041.
Runs 6 to 13 are comparative runs.

** denotes trade mark

## TABLE III

| Run No. | Sodium Salt | Snake Flow (cm) 1% | 2% |
|---|---|---|---|
| 14 | acetate ($C_2$) | 10.2 | 10.6 |
| 15 | propionate ($C_3$) | 10.2 | 10.9 |
| 16 | butyrate ($C_4$) | 10.4 | 11.7 |
| 17 | valerate ($C_5$) | 10.4 | 12.4 |
| 18 | caproate ($C_6$) | 10.2 | 16.0 |
| 19 | caprylate ($C_8$) | 10.2 | 13.2 |
| 20 | caprate ($C_{10}$) | 10.2 | 13.0 |
| 21 | laurate ($C_{12}$) | 9.9 | 11.4 |
| 22 | myristate ($C_{14}$) | 10.4 | 11.2 |
| 23 | palmitate ($C_{16}$) | 9.9 | 10.9 |
| 24 | stearate ($C_{18}$) | 10.2 | 10.9 |
| 25 | oleate | 10.2 | 10.9 |
| 26 | linoleate | 10.4 | 11.2 |
| 27 | linolenate | 10.4 | 11.7 |
| 28 | ricinoleate | 10.4 | 11.4 |
| 29 | succinate | 10.4 | 10.9 |
| 30 | adipate | 10.4 | 9.9 |
| 31 | fumarate | 9.9 | 9.9 |
| 32 | maleate | 10.4 | 10.9 |
| 33 | benzoate | 10.2 | 10.4 |
| 34 | phthalate | 10.2 | 10.7 |
| 35 | salicylate | 9.9 | 10.4 |
| 36 | - | (10.4) | |

\* The acids of Runs 25 to 35 are dicarboxylic, unsaturated, hydroxy and/or aromatic acids, and not of the present invention.

Run 36 is a comparative run, being the polyethylene without added sodium salt.

## TABLE IV

| Run No. | Polyethylene* Density (g/cm³) | Melt Index (dg/min) | Snake Flow (cm) Polyethylene | Composition |
|---|---|---|---|---|
| 37 | 0.955 | 120 | 14.5 | − |
| 38 | 0.959 | 85 | 13.2 | − |
| 39 | 0.959 | 65 | 12.2 | 19.8 |
| 40 | 0.960 | 50 | 11.7 | 18.5 |
| 41 | 0.960 | 25 | 10.2 | 16.7 |
| 42 | 0.960 | 17 | 9.4 | 13.2 |
| 43 | 0.960 | 13.5 | 8.4 | 15.0 |
| 44 | 0.960 | 7.3 | 7.6 | 12.2 |
| 45 | 0.960 | 5.0 | 7.4 | 11.4 |
| 46 | 0.960 | 0.75 | 6.9 | 14.7 |

\* The polyethylenes having a density of about 0.960 g/cm³ are ethylene homopolymers. The other polyethylenes are copolymers of ethylene and butene-1.

## TABLE V

| Run No. | Salt | Acid Chain Length ($C_n$) | Concentration %* | moles** | Snake Flow (cm) |
|---|---|---|---|---|---|
| 47 | Sodium caproate | 6 | 2 | 1.45 | 19.8 |
| 48 | Sodium caprylate | 8 | 2 | 1.20 | 16.8 |
| 49 | Sodium caprate | 10 | 2 | 1.03 | 14.7 |
| 50 | Sodium myristate | 14 | 2 | 0.80 | 14.2 |
| 51 | Sodium stearate | 18 | 2 | 0.65 | 14.0 |
| 52 | Sodium caproate | 6 | 0.5 | 0.36 | 13.0 |
| 53 | Sodium caproate | 6 | 1.0 | 0.73 | 13.0 |
| 54 | Sodium caproate | 6 | 1.5 | 1.09 | 15.5 |
| 55 | Sodium caproate | 6 | 2.0 | 1.45 | 19.8 |
| 56 | Sodium stearate/ sodium caproate(1:1) | 18/6 | 1/1 | 1.05 | 18.0 |
| 57 | Sodium stearate/ sodium caprylate(1:1) | 18/6 | 1/1 | 0.93 | 16.3 |
| 58 | Sodium stearate/ sodium caprate(1:1) | 18/10 | 1/1 | 0.84 | 15.5 |
| 59 | Sodium laurate/ sodium myristate(1:1) | 12/14 | 1/1 | 0.85 | 14.7 |
| 60 | Sodium palmitate/ sodium myristate(1:1) | 16/14 | 1/1 | 0.76 | 14.2 |
| 61 | Sodium myristate/ potassium myristate(1:1) | 14/14 | 1/1 | 1.45 | 14.0 |
| 62 | – | – | – | – | 13.0 |

\* % by weight

\*\* moles of salt/10 kg of polyethylene

NB. Runs 51 and 61 are not of the present invention.
Run 62 is the polyethylene without salt.

## Example VIII

In order to determine the effects of the use of sodium salts of short chain mono-carboxylic acids on the properties of polymers other than polyethylene, a series of compositions were prepared and subjected to an injection moulding process.

Powdered sodium caprylate was dry blended, on a weight basis, with ground polymer and then fed to the Engel injection moulding machine; the resultant molten polymer composition was injected into a snake-flow mould having a cross-section of 1mm x 13.7mm. The operating conditions of the injection moulding machine were adjusted so that, if possible, the polymer in the absence of sodium salt would exhibit a snake flow of about 7 cm.

Further details of the compositions and of the results obtained are given in Table VI. The results demonstrate that sodium salts of the type described herein are effective as flow improvers in a variety of thermoplastic polymers.

## TABLE VI

| Run* No. | Polymer | Melt Temp. (°C) | Pressure (MPa) | Snake Flow (cm) Na salt Concentration | | | |
|---|---|---|---|---|---|---|---|
| | | | | 0% | 0.5% | 1.0% | 1.5% |
| 66 | C | 285 | 6.2 | 19 | 19 | 30 | 36 |
| 67 | D | 248 | 7.6 | 18 | 25 | 30 | - |
| 68 | E | 305 | 6.9 | 21 | 25 | 26 | 27 |
| 69 | F | 288 | 13.8 | 19 | 30 | 34 | 51 |
| 70 | G | 287 | 3.5 | 20 | 20 | 22 | 27 |
| 71 | H | 300 | 6.9 | 18 | 20 | 33 | 33 |
| 72 | I | 300 | 4.1 | 17 | 17 | 20 | 28 |
| 73 | J | 290 | 13.8 | 10 | - | - | - |

*      The polymers were as follows:

C ... Profax 7623 polypropylene, a copolymer obtained from Hercules Inc., MFI = 2 dg/min;

D ... Zytel 101 polyamide, obtainable from Du Pont Canada Inc., relative viscosity = 51

E ... Zytel ST 801 NC supertough polyamide, obtainable from Du Pont Canada Inc.;

F ... Selar PT polyester barrier resin, obtained from E.I. du Pont de Nemours and Company;

G ... Polysar 220 polystyrene, obtained from Polysar Limited, melt index = 20 dg/min;

H ... Profax SB 861 polypropylene, a copolymer obtained from Hercules Inc., MFI = 2 dg/min;

I ... Profax PD 893 polypropylene, a homopolymer polypropylene obtained from Hercules Inc., MFI = 4 dg/min;

J ... Alathon DL 5005 polyethylene, a high density/high molecular weight polyethylene obtained from E.I. du Pont de Nemours and Company, melt index = 0.05 dg/min.

Note:     (i)  Profax, Zytel, Selar, Polysar and Alathon are trade marks

(ii) Run 73 was repeated using sodium salt concentrations of 2%, 2.5% and 3.0%; the snake flow values were 12.7 cm, 16.5 cm and 22.9 cm, respectively.

CLAIMS:

1. A composition comprising:

(a) an injection-mouldable polymer, and

(b) 0.5 to 10%, by weight of polymer, of a sodium salt of at least one $C_6-C_{16}$ aliphatic saturated mono-carboxylic acid.

2. The composition of Claim 1 in which up to 70% by weight of the sodium salt has been replaced with the sodium salt of a longer chain fatty acid, said fatty acid being a monocarboxylic saturated or unsaturated acid.

3. The composition of Claim 1 or Claim 2 in which the composition contains 1.0 to 5% by weight of the sodium salt.

4. The composition of any one of Claims 1-3 in which the salt is a sodium salt of a $C_6-C_{10}$ acid.

5. The composition of any one of Claims 1-4 in which the polymer is a polyethylene selected from the group consisting of homopolymers of ethylene and copolymers of ethylene and at least one $C_4-C_{10}$ higher alpha-olefin, said polyethylene having a density of at least 0.900 $g/cm^3$ and a melt index in the range of 0.03 to 120 dg/min.

6. The composition of Claim 5 in which the polyethylene has a density in the range of 0.950-0.965 $g/cm^3$.

7. The composition of Claim 5 or Claim 6 in which the melt index of the polyethylene is in the range of 0.3-65 dg/min.

8. The composition of any one of Claims 1-4 in which the polymer is a homopolymer or copolymer of propylene.

9. The composition of any one of Claims 1-4 in which the polymer is a polyamide.

10. The composition of any one of Claims 1-4 in which the polymer is a polyester.

11.    The composition of any one of Claims 1-4 in which the polymer is polystyrene.

12.    The composition of any one of Claims 1-4 in which the polymer is a polyolefin.

13.    In a process for the injection moulding of an article from a polymer composition, the improvement comprising feeding to injection moulding apparatus a composition comprising:

(a)    an injection-mouldable polymer, and

(b)    0.5 to 10%, by weight of polymer, of a sodium salt of at least one $C_6$-$C_{16}$ aliphatic saturated mono-carboxylic acid.

14.    The process of Claim 13 in which up to 70% by weight of the sodium salt has been replaced with the sodium salt of a longer chain fatty acid, said fatty acid being a monocarboxylic saturated or unsaturated acid.

15.    The process of Claim 13 or Claim 14 in which the composition contains 1.0 to 5% by weight of the sodium salt.

16.    The process of any one of Claims 13-15 in which the salt is a sodium salt of a $C_6$-$C_{10}$ acid.

17.    The process of any one of Claims 13-16 in which the polymer is a polyethylene selected from the group consisting of homopolymers of ethylene and copolymers of ethylene and at least one $C_4$-$C_{10}$ higher alpha-olefin, said polyethylene having a density of at least 0.900 $g/cm^3$ and a melt index in the range of 0.03 to 120 dg/min.

18.    The process of Claim 17 in which the polyethylene has a density in the range of 0.950-0.965 $g/cm^3$.

19.    The process of Claim 17 or Claim 18 in which the melt index of the polyethylene is in the range of 0.3-65 dg/min.

20. The process of any one of Claims 13-16 in which the polymer is a homopolymer or copolymer of propylene.

21. The process of any one of Claims 13-16 in which the polymer is a polyamide.

22. The process of any one of Claims 13-16 in which the polymer is a polyester.

23. The process of any one of Claims 13-16 in which the polymer is polystyrene.

24. The process of any one of Claims 13-16 in which the polymer is a polyolefin.